Europäisches Patentamt

European Patent Office

Office européen des brevets

(19)

(11) Numéro de publication : **0 250 349 B1**

(12) **FASCICULE DE BREVET EUROPEEN**

(45) Date de publication du fascicule du brevet :
25.03.92 Bulletin 92/13

(51) Int. Cl.⁵ : **B62D 21/20**

(21) Numéro de dépôt : **87440002.1**

(22) Date de dépôt : **16.01.87**

(54) **Longeron de chassis pour vehicule semi-remorque de citerne.**

(30) Priorité : **21.05.86 FR 8607360**

(43) Date de publication de la demande :
**23.12.87 Bulletin 87/52**

(45) Mention de la délivrance du brevet :
**25.03.92 Bulletin 92/13**

(84) Etats contractants désignés :
**AT BE CH DE ES GB GR IT LI LU NL SE**

(56) Documents cités :
**FR-A- 2 370 618**
**GB-A- 357 722**
**US-A- 1 328 683**
**US-A- 1 472 078**

(73) Titulaire : **SPITZER-EUROVRAC SàRL**
**Zone Industrielle (BP 7)**
**F-67640 Fegersheim (FR)**

(72) Inventeur : **Gantzer, Patrick**
**19 route de Saverne**
**F-67490 Dettwiller (FR)**
Inventeur : **Verfaille, Pierre**
**Am Wachtbuckel 7**
**W-6951 Schwarzach (DE)**
Inventeur : **Rappold, Pierre**
**Z.I.**
**F-67460 Fegersheim (FR)**
Inventeur : **Witzany, Rudolf**
**Seestrasse 18**
**D-5322 Hof Bei Salzburg (AT)**

(74) Mandataire : **Arbousse-Bastide, Jean-Claude**
**Philippe**
**CABINET ARBOUSSE BASTIDE 20, rue de**
**Copenhague**
**F-67000 Strasbourg (FR)**

**Description**

La présente invention concerne un longeron destiné à la construction d'un châssis de véhicule semi-remorque conçu pour recevoir une citerne, les dimensions de l'ensemble devant répondre aux exigences de la règlementation de la circulation routière définissant un gabarit par une longueur, une largeur et une hauteur.

Les multiples réalisations connues à ce jour en la matière font appel à un nombre important de types de constructions qui ont défini deux tendances technologiques différentes visant toujours le même objectif, à savoir la capacité maximale de la citerne en respectant les dimensions contraignantes de gabarit routier.

Une des technologies récentes consiste en la suppression du châssis, visant à rendre la citerne autoportante avec des attaches de suspension du ou des trains roulants et des moyens de remorquage reliés par des renforts solidaires de la paroi de la citerne.

L'autre technologie, traditionnelle, consiste à mettre en oeuvre un châssis à longerons et traverses comportant attelage de remorquage, suspensions et trains roulants, ledit châssis étant conçu pour encaisser tous les efforts dûs à la charge apportée par la citerne.

Les calculs de résistance des matériaux définissent une certaine section à donner au longeron et en particulier certaines hauteurs en différents points du châssis, qui est limité d'autre part en largeur par la voie du ou des essieux.

Dans sa partie avant, ledit châssis est équipé d'un système d'attelage de remorquage conçu pour s'accoupler avec celui du véhicule tracteur, généralement situé sensiblement au-dessus de son essieu moteur. Ledit système d'attelage est aussi le second point d'appui de la semi-remorque qui se prolonge au maximum tout en conservant les degrés de liberté nécessaires à l'évolution de l'ensemble du véhicule articulé. Cette partie avant de châssis présente un certain porte-à-faux dont les longerons doivent encaisser la charge considérée dans cette zone.

Lesdits longerons sont d'autant plus sollicités que la semi-remorque est munie d'un système de basculement de la citerne constitué par un vérin ou tout autre dispositif permettant l'élévation de ladite citerne dans sa partie avant.

Dans un souci d'allègement de la semi-remorque et plus particulièrement de son châssis on a remplacé l'acier par un alliage léger, toutefois l'alliage entraîne, à charge équivalente et du fait de son taux de fatigue admissible inférieur à celui de l'acier, des sections de longerons plus importantes et en particulier dans le sens de la hauteur, en rapport direct avec l'inertie de ladite section, ou une augmentation de la section du profilé qui grève le poids du châssis. Il s'ensuit qu'une telle construction calquée sur celle d'un châssis en acier deviendrait défavorable pour la citerne, laquelle devrait être diminuée en hauteur et par conséquent perdrait de son volume.

Tout en utilisant des profilés dits standards, certains constructeurs ont proposé des solutions pour remédier à cet inconvénient, par exemple en élargissant le châssis par des formes déviées de longerons en avant du ou des essieux permettant de mieux encastrer la citerne mais nécessitant des opérations de cintrage desdits longerons, ou bien, pour obtenir le même effet, en découpant judicieusement les ailes intérieures des profilés constituant les longerons, ce qui modifie défavorablement leur résistance mécanique.

Parmi les différents types de longerons connus à ce jour, on peut citer celui décrit dans le document FR-A-2 370 618, qui comporte les caractéristiques définies dans le préambule de la revendication et présente sur une certaine longueur une découpe en ligne brisée permettant de réduire la hauteur initiale du fer utilisé à une hauteur permettant de faire reposer plus facilement le longeron sur le tracteur.

Un autre type de longeron est décrit dans la Revue Suisse de l'Aluminium de juin 1979, pages 235-242, ce longeron étant constitué de deux profilés en "T" assemblés par soudure des extrémités de leurs ailes verticales.

Toutefois les longerons décrits dans ces documents, conçus pour équiper notamment les châssis de tous les véhicules tractés, ne permettraient pas le positionnement et le maintien optimum d'une citerne chargée sur un véhicule semi-remorque, en raison de la forme non adaptée des profilés qui les constituent.

La présente invention vise à optimiser la construction du châssis pour un meilleur positionnement de la citerne tout en lui conservant son volume notamment dans la partie avant du porte-à-faux, grâce à la forme particulière donnée à la section des profilés constitutifs des longerons du châssis, telle que définie dans la partie caractérisante de la revendication.

L'invention sera mieux comprise à la lecture de la description ci-après d'un de ses modes de réalisation, illustré par le dessin annexé dans lequel :

– la figure 1 représente une vue partielle en perspective d'une semi-remorque munie d'un châssis incorporant des longerons selon l'invention.

– la figure 2 représente une coupe d'un longeron du châssis au niveau du pivot d'attelage, selon la ligne III-III de la figure 1.

– la figure 3 représente une coupe du même longeron au niveau du train roulant, selon la ligne IV-IV de la figure 1.

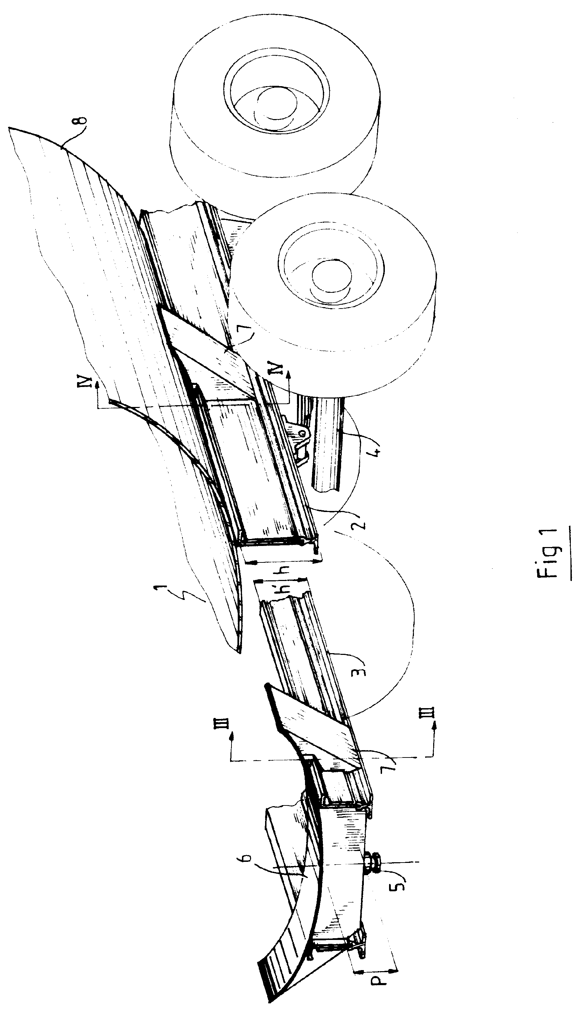

Si l'on se réfère à la figure 1 on voit que la semi-remorque (1) est constituée d'une citerne (8) généralement de forme cylindrique sur la majeure partie de sa longueur, portée par plusieurs berceaux (6) dont les extrémités se terminent par des arcs-boutants (7) transmettant aux longerons du châssis (2), (3) les efforts dûs à la charge de ladite citerne.

La partie remorque dans le cas particulier de véhicule dit "semi-remorque" est constituée dans sa partie postérieure d'un ou plusieurs trains de roulement avec suspensions et essieux (4) tandis que dans sa partie avant ladite semi-remorque est reliée au véhicule tracteur par un système de pivot (5), l'ensemble étant relié par un châssis en acier ou en alliage léger formé de deux poutres ou longerons (2), (3) et de plusieurs traverses dont certaines sont en forme de berceau et constituent des berceaux-traverses (6).

Les dimensions dudit châssis sont définies :
– en largeur par la voie du ou des essieux, cette largeur étant limitée par l'espacement entre les flancs internes des pneus du train de roulement ;
– en longueur, en hauteur et en largeur totale, par la règlementation de circulation routière;
– dans sa partie avant par l'essieu moteur du véhicule tracteur sans entraver ses changements de direction en s'articulant autour du pivot (5), la conservation de l'horizontalité de l'ensemble imposant une diminution de la hauteur (h) du longeron (2) à une hauteur (h') à la partie avant (3) dudit longeron. Ces hauteurs h et h' du longeron sont capitales dans la construction du châssis puisqu'elles sont déterminées par les calculs de résistances de matériaux en fonction des efforts issus de la charge de la citerne et du choix du matériau définissant un taux de fatigue admissible.

Si pour des raisons d'allègement on désire substituer un alliage léger à l'acier, il y a une influence directe sur l'inertie de la section et par conséquent sur sa hauteur h qui doit être plus importante du fait du taux de fatigue de l'alliage léger inférieur à celui de l'acier.

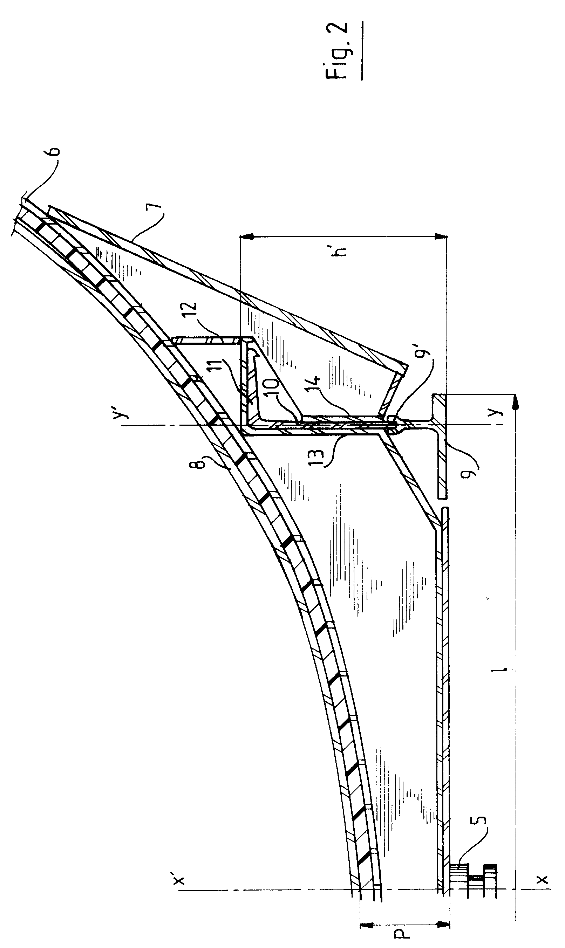

En se référant à la figure 2 où l'on voit une coupe transversale du longeron dans la partie avant dudit châssis, on constate qu'il est parfaitement situé en position par rapport à l'axe XX' du véhicule, la cote 1 désignant la largeur du châssis elle-même définie par la voie des roues, et la cote h' sa hauteur au-dessus du plan d'appui du pivot d'attelage (5).

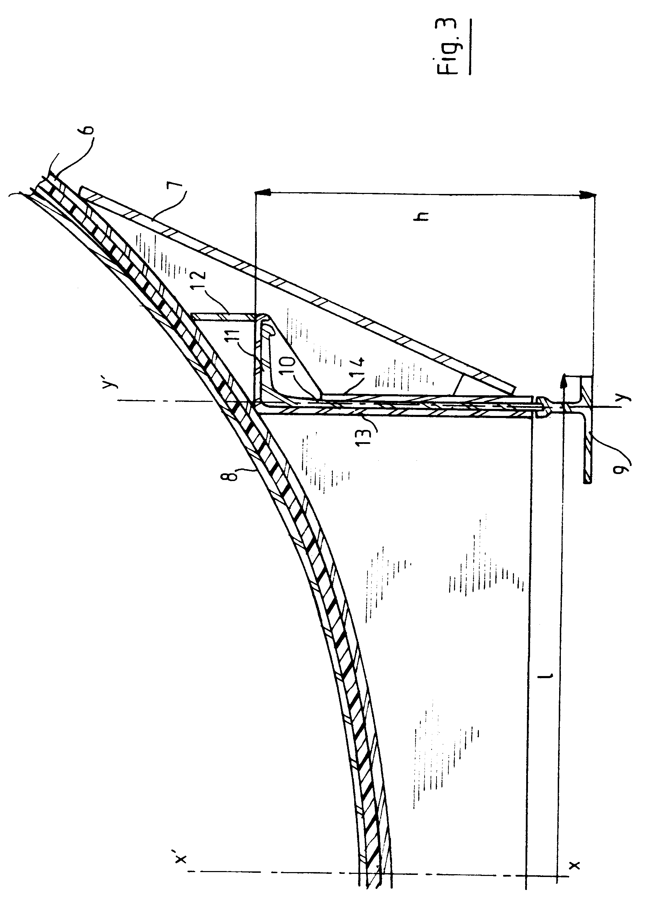

Le longeron se trouve donc calé dans un plan représenté par la verticale YY' et pour éviter de surélever la citerne (8) et d'augmenter sa cote P d'enfoncement dans le châssis, le longeron selon l'invention a été réalisé par l'assemblage judicieux de profilés en alliage léger lui conférant toutes les caractéristiques mécaniques désirées. Le profilé selon l'invention comporte ainsi, dans sa partie inférieure, un profilé (9) en forme de "T", dont la semelle est déportée vers l'intérieur du châssis pour des raisons qui seront données dans la description de la figure 3.

Ledit profilé (9) possède dans sa partie verticale supérieure une rainure (9') pour la mise en place du second profilé (10), en forme de "L" inversé, dont l'aile renforcée (11) est positionnée vers l'extérieur dudit longeron pour permettre le passage de la citerne (8).

Une semelle périphérique (13) attenante au berceau-traverse (6) vient prendre appui sur tout le pourtour du profilé (10). Une plaque (12) assure la liaison entre le berceau-traverse (6) et un arc-boutant (7) positionné extérieurement et ajusté sur le profilé (10) par l'intermédiaire d'une semelle (14). Il contribue à la résistance de l'ensemble et encaisse en particulier les efforts secondaires dûs à la flexion déviée s'exerçant sur le longeron.

En se référant à la figure 3 qui représente une vue tranversale du longeron au niveau du train roulant du véhicule on retrouve la continuité des deux profilés :
– celui en forme de "T" inversé (9) dont la semelle déportée vers l'intérieur est nécessaire pour le passage des pneumatiques du train roulant (4);
– celui en forme de "L" inversé (10) qui assemblé avec le premier (9) donne une hauteur h beaucoup plus importante audit longeron, rendue nécessaire par les efforts considérés dans cette zône et les fixations des suspensions du train roulant (4).

On distingue la semelle périphérique (13) ajustée sur la hauteur du profilé (10), l'arc-boutant (7) avec sa plaque (12) et sa semelle d'appui (14) ajustée en fonction de la nouvelle hauteur h du longeron.

Le passage de la hauteur h' à la hauteur h se fait de façon progressive par une forme de découpe en "col de cygne" de l'aile verticale du profilé (10) en "L" inversé, cette découpe affectant le bord inférieur du profilé (10), dont le bord supérieur présente l'avantage de rester rectiligne.

On remarquera que l'âme du longeron est bien positionnée dans le plan YY', alors que la mise en oeuvre d'un profilé standard dit en "I" aurat entraîné la nécessité de le modifier par usinage pour supprimer en particulier la partie supérieure de la semelle, qui aurait empiété sur l'espace dévolu à la citerne.

**Revendications**

1. Longeron pour châssis en alliage léger de véhicule semi-remorque porteur d'une citerne cylindrique, du type constitué par l'assemblage d'au moins deux profilés métalliques superposés comportant chacun une aile verticale et solidarisés entre eux par les extrémités desdites ailes verticales, le profilé inférieur (9) étant à section en "T" inversé et l'aile verticale du profilé supérieur (10) présentant une hauteur qui augmente progressivement de l'avant vers l'arrière du châssis, entraînant une augmentation progressive, de l'avant vers l'arrière, de la hauteur (h, h') du longeron, caractérisé en ce que la semelle du profilé inférieur (9) à section en "T" est déportée vers l'intérieur du châssis et en ce que le profilé supérieur (10) est à section en "L" inversé, l'aile horizontale (11) dudit profilé (10) étant renforcée et positionnée vers l'extérieur du châssis de manière à autoriser le positionnement optimum de la citerne, d'une part en permettant de réduire au minimum la distance P entre la citerne (8) et le pivot d'attelage (5) et d'autre part en permettant que le longeron présente une hauteur (h, h') maximum sur toute sa longueur.

## Patentansprüche

1. Längsträger aus Leichtmetall für das Chassis eines Kessel-Sattelanhängers von dem Typ, der aus mindestens zwei übereinanderliegenden Metallprofilträgern besteht, von denen jedes einen senkrechten Arm besitzt und die an den Enden dieser Arme miteinander verbunden sind, wobei der untere Träger (9) aus einem umgekehrten T-Profil besteht und der senkrechte Arm des oberen Trägers (10) eine Höhe besitzt, die von vorn nach hinten am Chassis gleichmäßig zunimmt, wodurch auch die Höhe (h, h') des Längsträgers von vorn nach hinten gleichmäßig zunimmt, dadurch gekennzeichnet, daß die Sohle des unteren Trägers (9) aus T-Profil zur Chassis-Innenseite hin verlagert ist und der obere Träger (10) ein umgekehrtes L-Profil besitzt, wobei der waagrechte Arm (11) dieses Profils (10) verstärkt und zur Chassis-Außenseite hin gerichtet ist, wodurch sich der Kessel einerseits durch größtmögliche Verringerung des Abstandes P zwischen dem Kessel (8) und dem Sattelzapfen (5) und andererseits durch Erreichen einer größtmöglichen Höhe (h, h') des Längsträgers über dessen gesamte Länge hin optimal positionieren läßt.

## Claims

1. Side rail for a light alloy semi-trailer vehicle chassis bearing a cylindrical cistern of the type constituted by the mounting of at least two superimposed metallic profiles, each comprising one vertical wing and rendered integral with one another by the extremities of said vertical wings, the lower profile (9) having an inverted "T" section and the vertical wing of the upper profile (10) having a height which progressively increases from the front to the rear of the chassis resulting in a progressive increase, from the front towards the rear, of the height (h, h') of the side rail, wherein the sole of the lower profile (9) with a "T" section is displaced towards the inside of the chassis and wherein the upper profile (10) has an inverted "L" section, the horizontal wing (11) of said profile (10) being reinforced and positioned towards the outside of the chassis so as to allow for the optimum positioning of the cistern by firstly making it possible to reduce to a minimum the distance P between the cistern (8) and the kingpin (5), and secondly ensuring that the side rail exhibits a maximum height (h, h') over its entire length.

Fig 1

EP 0 250 349 B1

EP 0 250 349 B1

Fig. 2

EP 0 250 349 B1

Fig. 3

7